# EUROPEAN PATENT SPECIFICATION

(11) **EP 2 757 619 B1**
(45) Date of publication and mention of the grant of the patent: **17.08.2016**
(21) Application number: 13836222.3
(22) Date of filing: 28.11.2013
(51) Int. Cl.: H01M 4/13, H01M 4/36, H01M 4/38, H01M 4/587, H01M 10/052

(54) **ANODE MATERIAL FOR LITHIUM SECONDARY BATTERY, METHOD FOR MANUFACTURING SAME, AND LITHIUM SECONDARY BATTERY COMPRISING SAME**
ANODENAKTIVES MATERIAL FÜR EINE LITHIUM-SEKUNDÄRBATTERIE, HERSTELLUNGSVERFAHREN DAFÜR UND LITHIUM-SEKUNDÄRBATTERIE DAMIT
MATÉRIAU D'ANODE POUR UNE BATTERIE SECONDAIRE AU LITHIUM, PROCÉDÉ DE FABRICATION DUDIT MATÉRIAU, ET BATTERIE SECONDAIRE AU LITHIUM QUI COMPREND LEDIT MATÉRIAU

(30) Priority: 30.11.2012 KR 20120138524; 27.11.2013 KR 20130145165
(43) Date of publication of application: 23.07.2014
(73) Proprietor: LG Chem, Ltd., Seoul 150-721 (KR)
(72) Inventor: YOO, Jung Woo, Daejeon 305-738 (KR); KWON, Won Jong, Daejeon 305-738 (KR); HWANG, Eui Yong, Daejeon 305-738 (KR); LEE, Kil Sun, Daejeon 305-738 (KR); KIM, Je Young, Daejeon 305-738 (KR); LEE, Yong Ju, Daejeon 305-738 (KR)
(74) Representative: Goddar, Heinz J.
(86) International application number: PCT/KR2013/010919
(87) International publication number: WO 2014/084635

(56) References cited:
- EP-A1- 2 579 365
- WO-A1-2010/135446
- KR-B1- 101 030 041
- US-A1- 2002 164 479
- US-A1- 2005 136 330
- HUIQIAO LI ET AL: "Enhancing the performances of Li-ion batteries by carbon-coating: present and future", CHEMICAL COMMUNICATIONS, vol. 48, no. 9, 1 January 2012 (2012-01-01), page 1201, XP055049890, ISSN: 1359-7345, DOI: 10.1039/c1cc14764a
- KHOMENKO, V. G. ET AL.: 'Lithium-ion batteries based on carbon-silicon-graphite composite anodes' JOURNAL OF POWER SOURCES vol. 165, no. 2, 2007, pages 598 - 608, XP005914502
- WEBER, J. ET AL.: 'One-dimensional nanostructures: fabrication, characterisation and applications' INTERNATIONAL MATERIALS REVIEWS vol. 53, no. 4, 2008, pages 235 - 255, XP055136762
- LI, H. ET AL.: 'Enhancing the performances of Li-ion batteries by carbon-coating: present and future' CHEMICAL COMMUNICATIONS vol. 48, no. 9, 28 November 2011, pages 1201 - 1217, XP055049890
- HUANG, R. ET AL.: 'Carbon-coated silicon nanowire array films for high-performance lithium-ion battery anodes' APPLIED PHYSICS LETTERS vol. 95, no. 13, 2009, XP012125878
- KHOMENKO ET AL: "Lithium-ion batteries based on carbon-silicon-graphite composite anodes", JOURNAL OF POWER SOURCES, ELSEVIER SA, CH, vol. 165, no. 2, 28 February 2007 (2007-02-28), pages 598-608, XP005914502, ISSN: 0378-7753, DOI: 10.1016/J.JPOWSOUR.2006.10.059
- John R. Kershaw ET AL: "Structural characterization of coal-tar and petroleum pitches", Energy & Fuels, vol. 7, no. 3, 1 May 1993 (1993-05-01), pages 420-425, XP055204772, ISSN: 0887-0624, DOI: 10.1021/ef00039a014

## Description

### TECHNICAL FIELD

The present invention relates to an anode active material for a lithium secondary battery and a preparation method thereof, and more particularly, to an anode active material including carbon-based particles; silicon nanowires grown on the carbon-based particles; and a carbon coating layer on surfaces of the carbon-based particles and the silicon nanowires, and a preparation method thereof.

### BACKGROUND ART

Recently, in line with miniaturization, lightweight, thin profile, and portable trends in electronic devices according to the development of information and telecommunications industry, the need for high energy density batteries used as power sources of such electronic devices has increased. Currently, research into lithium secondary batteries, as batteries that may best satisfy the above need, has actively conducted.

Various types of carbon-based materials including artificial graphite, natural graphite, or hard carbon, which may intercalate/deintercalate lithium ions, have been used as an anode active material of a lithium secondary battery. Graphite among the above carbon-based materials has been most widely used, because it may provide advantages in terms of energy density of the lithium battery and may secure long lifetime of the lithium secondary battery due to its excellent reversibility.

However, since the graphite may have low capacity in terms of energy density per unit volume of an electrode and may facilitate a side reaction with an organic electrolyte solution at a high discharge voltage, there may be a risk of fire or explosion due to the malfunction and overcharging of the battery.

Therefore, a metal-based anode active material, such as silicon (Si), has been studied. It is known that a Si metal-based anode active material exhibits a high lithium capacity of about 4,200 mAh/g. However, a volume change of a maximum of 300% or more may occur before and after the reaction with lithium, i.e., during charge and discharge. As a result, there is a phenomenon in which the performance of the battery may degrade because a conductive network in the electrode may be damaged and contact resistance between particles may increase.

Thus, a method has been attempted, in which substantial changes in a diameter according to the volume change are reduced by decreasing the size of the silicon particles from a typical micron size to nanoscale. However, there may be many difficulties in a method of synthesizing a uniform nano silicon anode active material and uniformly distributing the nano silicon anode active material in a slurry.

In order to address such difficulties, nanowires, in addition to carbon nanotubes, have received attention as a nanomaterial that is the closest to commercialization as high-performance nanodevices, such as field effect transistors, photodetectors, chemical sensors and biosensors, nanoscale lasers, and light-emitting diodes (LEDs) using one-dimensional nanowires, begin to be realized.

As examples of such techniques, a method of forming nanowires by injecting silicon in a gas state and applying high heat or a method of growing nanowires by directly heating a silicon wafer has been developed. However, in these cases, the performance of the battery may degrade due to the detachment and weak electrical contact of the silicon nanowires during the preparation of the slurry or the operation of the battery.

WO2010135446 discloses an anode active material and a method for the manufacture thereof, according to the preamble of claims 1 and 4. Khomenko et al, in Journal of Power Sources 165 (2007) 598-608, discloses carbon coating of graphite modified with nano-sized silicon. US20050136330 discloses common carbon coatings on silicon/carbon composites.

Therefore, there is an urgent need to develop an anode active material for addressing the above limitations.

### DISCLOSURE OF THE INVENTION

### TECHNICAL PROBLEM

The present invention provides an anode active material which may improve the performance of a secondary battery by increasing physical bonding force between carbon-based particles and silicon nanowires grown on the carbon-based particles as well as improving conductivity, and a preparation method thereof.

### TECHNICAL SOLUTION

According to an aspect of the present invention, there is provided an anode active material comprising: carbon-based particles; silicon nanowires grown on the carbon-based particles; and a carbon coating layer formed on surfaces of the carbon-based particles and the silicon nanowires wherein an average particle diameter (D₅₀) of the carbon-based particles is in a range of 10 µm to 30 µm, the silicon nanowire has a diameter ranging from 10 nm to 100 nm and a length ranging from 100 nm to 5 µm, a thickness of the carbon coating layer is in a range of 5 nm to 50 nm, and the carbon coating layer covers the entire surfaces of the carbon-based particles and the silicon nanowires, and an amount of silicon is in a range of 5 wt% to 30 wt% based on a total weight of the carbon-based particles on which the silicon nanowires are grown.

According to another aspect of the present invention, there is provided a method of preparing an anode active material, the method comprising: growing silicon nanowires on carbon-based particles by using a silicon raw material and a catalytic metal; and forming a carbon coating layer on surfaces of the silicon nanowires and the carbon- based particles on which the silicon nanowires are grown to cover the entire surfaces of the carbon-based particles and the silicon nanowires, wherein the carbon coating layer is formed by coating the carbon-based particles on which the silicon nanowires are grown with a carbon precursor and performing a heat treatment, and the coating is performed by a wet coating method using a diluted amorphous carbon precursor in an organic solvent,the amorphous carbon is a coal-derived pitch or a petroleum-derived pitch having a weight-average molecular weight ranging from 400 to 1,500, the organic solvent comprises any one selected from the group consisting of ethanol, toluene, methanol, hexane, acetone, tetrahydrofuran, pyridine, quinoline, and benzoquinone, or a mixture of two or more thereof, the heat treatment is performed in an inert atmosphere, and an amount of silicon is in a range of 5 wt% to 30 wt% based on a total weight of the carbon-based particles on which the silicon nanowires are grown.

According to another aspect of the present invention, there is provided an anode including a current collector, and the anode active material formed at least one surface of the current collector.

According to another aspect of the present invention, there is provided a lithium secondary battery including a cathode, the anode, and a separator disposed between the cathode and the anode.

### ADVANTAGEOUS EFFECTS

Since an anode active material of the present invention, in which a carbon coating layer is formed on surfaces of carbon-based particles and silicon nanowires grown on the carbon-based particles, is used in a lithium secondary battery, conductivity may not only be improved but physical bonding force between the carbon-based particles and the silicon nanowires may also be further increased. Thus, lifetime characteristics of the battery may be improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a schematic view illustrating an anode active material according to an embodiment of the present invention;
FIGS. 2 and 3 are scanning electron microscope (SEM) images of anode active materials respectively prepared in Comparative Example 1 and Example 1;
FIGS. 4 and 5 are SEM images for respectively identifying degrees in which silicon nanowires remain after diluting the anode active materials of Comparative Example 1 and Example 1 in water, ethanol, and toluene;
FIG. 6 is a graph illustrating discharge capacities of lithium secondary batteries of Example 2 and Comparative Example 2; and
FIG. 7 is a graph illustrating coulombic efficiencies of the lithium secondary batteries of Example 2 and Comparative Example 2.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

An anode active material for a lithium secondary battery of the present invention includes: carbon-based particles; silicon nanowires grown on the carbon-based particles; and a carbon coating layer formed on surfaces of the carbon-based particles and the silicon nanowires wherein an average particle diameter (D50) of the carbon-based particles is in a range of 10 µm to 30 µm, the silicon nanowire has a diameter ranging from 10 nm to 100 nm and a length ranging from 100 nm to 5 µm, a thickness of the carbon coating layer is in a range of 5 nm to 50 nm, and the carbon coating layer covers the entire surfaces of the carbon-based particles and the silicon nanowires,and an amount of silicon is in a range of 5 wt% to 30 wt% based on a total weight of the carbon-based particles on which the silicon nanowires are grown.

According to the present invention, the volume change generated during charge and discharge may be inhibited by directly growing silicon nanowires on carbon-based particles. In addition, since a bonding force between the silicon nanowires and the carbon-based particles may be further increased by forming a carbon coating layer on the surfaces of the carbon-based particles and the silicon nanowires, the detachment of the silicon nanowires may be prevented, and the performance of a battery is further improved by providing conductivity.

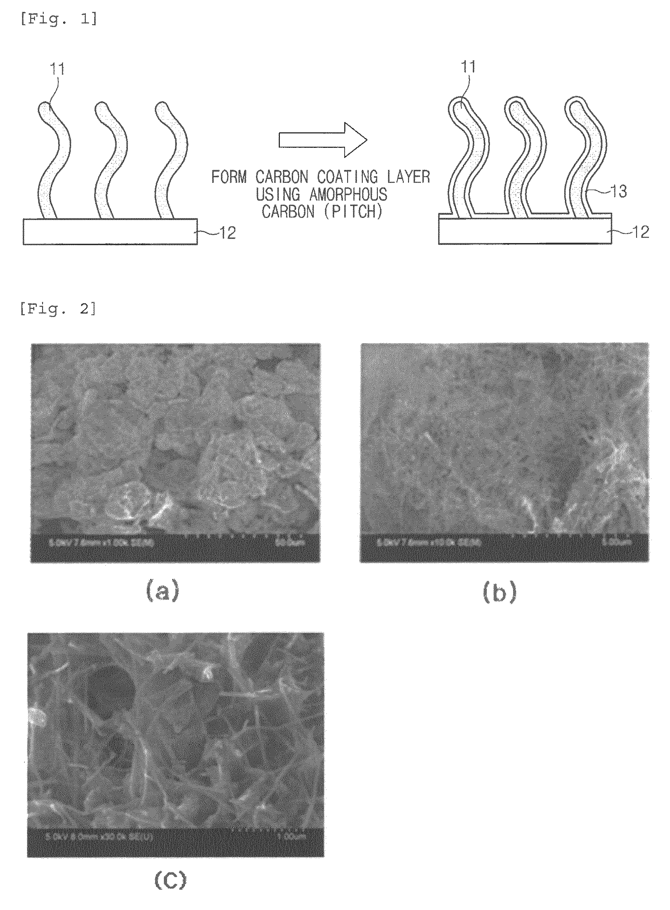

Specifically, as a schematic view of an anode active material illustrated in FIG. 1, the anode active material according to an embodiment of the present invention includes silicon nanowires 11 grown on carbon-based particles 12 and a carbon coating layer 13 formed on surfaces of the silicon nanowires 11 and the carbon-based particles 12.

According to an embodiment of the present invention, the carbon coating layer 13 is formed by partially or entirely coating the surfaces of the carbon-based particles 12 and the silicon nanowires 11. However, since the formation of the carbon coating layer 13 by coating the entire surfaces of the carbon-based particles 12 and the silicon nanowires 11 further increases the bonding force between the silicon nanowires 11 and the carbon-based particles 12 to prevent the detachment of the silicon nanowires 11, the performance of the secondary battery is improved.

A carbon material, which may intercalate or deintercalate lithium ions, may be used as the carbon-based particles that are used in the embodiment of the present invention. The carbon-based particles may include any one selected from the group consisting of carbon-based powder, carbon black, natural graphite, and artificial graphite, or a mixture of two or more thereof. The carbon-based particles have an average particle diameter (D₅₀) of 10 µm to 30 µm, a specific surface area of 2.0 m²/g to 5.0 m²/g, and a compressed density of 1.5 g/cc to 1.85 g/cc under a pressure of 12 Mpa to 16 Mpa.

In the present invention, the average particle diameter (D₅₀) of the carbon particles may be defined as a particle diameter at 50% in a cumulative particle diameter distribution. For example, the average particle diameter (D₅₀) of the carbon particles according to an embodiment of the present invention may be measured by using a laser diffraction method. The laser diffraction method may generally measure a particle diameter ranging from a submicron level to a few mm, and may obtain highly repeatable and high resolution results.

Also, the specific surface area of the carbon-based particles may be measured by a Brunauer-Emmett-Teller (BET) method. For example, the specific surface area may be measured by a 6-point BET method according to a nitrogen gas adsorption-flow method using a porosimetry analyzer (Belsorp-II mini by Bell Japan Inc.).

The silicon nanowire according to an embodiment of the present invention may be used as a concept that includes silicon in the form of a wire having a diameter in a nanometer range and a high aspect ratio regardless of the preparation method thereof. Therefore, a silicon nanorod or silicon nanotube may be included in the concept of the silicon nanowire.

According to the present invention, an amount of silicon in the silicon nanowires may be in a range of 5 wt% to 30 wt% based on a total weight of the carbon-based particles on which the silicon nanowires are grown. In the case that the amount of silicon is greater than the above range, since the excessive amount of silicon covers the carbon-based particles, the specific surface area may increase to accelerate a decomposition reaction of an electrolyte solution. In the case in which the amount of silicon is less than the above range, since silicon nanowires may not be grown entirely on the carbon-based particles, lifetime characteristics of the secondary battery may degrade.

The silicon nanowire according to the embodiment of the present invention has a diameter ranging from about 10 nm to about 100 nm and a length ranging from about 100 nm to about 5 µm. Also, the nanowire may be linear or nonlinear, in which the nanowire may be curved or bent over the entire or partial length thereof. In general, although silicon (Si) exhibits high lithium capacity, Si may cause a volume change of 300% or more before and after the reaction with lithium, i.e., during charge and discharge. The volume change may be eliminated by directly growing nanowires three-dimensionally on the carbon-based particles.

However, in the carbon-based particles on which the nanowires are grown, the lifetime of the battery may be reduced due to the detachment and weak electrical contact of the silicon nanowires during the preparation of a slurry or the operation of the battery when the bonding force between the nanowires and the carbon-based particles is low.

Since the carbon coating layer is formed on the surfaces of the silicon nanowires grown on the carbon-based particles as well as the carbon-based particles, additional conductivity may be provided and simultaneously, the bonding between the carbon-based particles and silicon nanowires may be strengthened to prevent the detachment of the silicon nanowires from the carbon-based particles during the volume change according to charge and discharge. Thus, the present invention may provide excellent lifetime characteristics and charge and discharge capacity characteristics of the secondary battery.

Also, in the anode active material according to the embodiment of the present invention, a thickness of the carbon coating layer is in a range of 5 nm to 50 nm. In the case that the thickness of the carbon coating layer is less than 5 nm, an effect of increasing electrical conductivity due to the carbon coating layer may be insignificant and the reactivity with the electrolyte solution during the application of the anode active material may be high. Thus, an initial efficiency may be reduced. In the case in which the thickness of the carbon coating layer is greater than 50 nm, since the thickness of the carbon coating layer may be excessively increased to act as a barrier to the mobility of lithium ions, resistance may increase.

A method of preparing an anode active material according to an embodiment of the present invention will be described in detail as follows:

That is, the method of preparing an anode active material according to the embodiment of the present invention includes growing silicon nanowires on carbon-based particles by using a silicon raw material and a catalytic metal (step i); and forming a carbon coating layer on surfaces of the silicon nanowires and the carbon-based particles on which the silicon nanowires are grown (step ii).

In the growing of the silicon nanowires (step i) according to an embodiment of the present invention, a method of growing silicon nanowires may be a typical method known in the art, and for example, may be a method selected from the group consisting of a vapor-liquid-solid phase (VLS) method, a solid-liquid-solid (SLS) method, a metal organic chemical vapor deposition (MOCVD) method, and a molecular beam epitaxy (MBE) method. For example, the method of growing silicon nanowires may be the VLS method.

The silicon raw material for growing the silicon nanowires may include SiCl₄, SiH₄, or a mixture thereof.

The catalytic metal may be a seed of the growth of a nanostructure, and may be the form of a metal thin film or metal powder. The metal thin film, for example, may have a thickness of about 1 Å to about 1,000 nm, and the metal powder, for example, may have a diameter of 1 nm to 1,000 nm. However, the present invention is not particularly limited thereto. A type of the catalytic metal may include a metal that may decrease a melting point of silicon. Examples of the catalytic metal may include any one selected from the group consisting of gold (Au), iron (Fe), silver (Ag), and nickel (Ni), or a mixed metal of two or more thereof.

Also, in order to provide surface conductivity to the carbon-based particles on which the silicon nanowires are grown and strengthen the physical bonding force between the silicon nanowires and the carbon-based particles, a carbon coating layer is formed on the surfaces of the carbon-based particles on which the silicon nanowires are grown (step ii).

According to the present invention, the carbon coating layer may be formed by coating the carbon-based particles on which the silicon nanowires are grown with a carbon precursor and performing a heat treatment.

The carbon precursor is amorphous carbon. Specifically, the amorphous carbon includes any one selected from a coal-derived pitch and a petroleum-derived pitch.

According to the present invention, the coal-derived pitch or petroleum-derived pitch has a weight-average molecular weight (Mw) of the pitch in a range of 400 to 1500. When the weight-average molecular weight of the pitch is greater than 3,000, the dispersion of a solvent may be difficult, and thus, uniform pitch coating may not be performed. When the weight-average molecular weight of the pitch is less than 200, a yield during the pitch coating may decrease and a uniform coating layer may be difficult to be obtained. Also, in order to perform uniform coating by allowing the pitch to penetrate gaps between the silicon nanowires, the weight-average molecular weight of the pitch is in a range of 400 to 1,500, more preferably, 500 to 800.

Furthermore, according to an embodiment of the present invention, a mixing ratio of the carbon-based particles on which the silicon nanowires are grown to the carbon precursor (e.g., amorphous carbon) is in a range of 90 parts by weight:10 parts by weight to 99 parts by weight:1 part by weight, more preferably, 90 parts by weight:10 parts by weight to 95 parts by weight:5 parts by weight. In the case that the weight of the carbon precursor is less than 1 part by weight, since a total coating amount is insufficient, the bonding force between the carbon-based particles and the silicon nanowires may not only be decreased but uniform coating may also be difficult to be obtained. In the case in which the weight of the carbon precursor is greater than 10 parts by weight, powder may be agglomerated after carburization due to the aggregation of the particles.

According to the present invention, the wet coating method, for example, may be performed by dipping the carbon-based particles on which the silicon nanowires are grown in an organic solvent in which amorphous carbon is diluted. The carbon-based particles on which the silicon nanowires are grown and the amorphous carbon, for example, are mixed with a mixer or mortar, and wet coating is then performed by dipping the mixture thus prepared in a solvent, i.e., any one selected from the group consisting of ethanol, toluene, methanol, hexane, acetone, tetrahydrofuran, pyridine, quinoline, and benzoquinone, or a mixture of two or more thereof. Then, a heat treatment is performed.

According to the present invention, the heat treatment is performed in an inert atmosphere.

The heat treatment is performed at a temperature ranging from 300°C to 1,500°C and may be performed at a temperature ranging preferably from 300°C to 800°C, more preferably from 300°C to 500°C for 5 hours to 10 hours. In the case that the temperature of the heat treatment is less than 300°C, since a residual organic or inorganic material may remain, the resistance of the coating layer may increase. Also, since a desirable solid electrolyte interface (SEI) layer may not be formed, the initial efficiency related to the battery performance may be reduced. In the case in which the temperature of the heat treatment is greater than 1,500°C, processing costs may increase.

The carbon-based particles and the silicon nanowires may be entirely uniformly or non-uniformly coated with the carbon coating layer, and the carbon coating layer may be formed to cover a portion or the entirety of the carbon-based particles and the silicon nanowires. A thickness of the coating layer is not particularly limited. However, the thickness thereof may be in a range of 5 nm to 50 nm, preferably, 5 nm to 20 nm.

Also, the present invention may include a current collector, and an anode including the anode active material that is formed on at least one surface of the current collector.

According to an embodiment of the present invention, the anode may be prepared by a preparation method typically used in the art. Also, similar to the anode, a cathode, according to an embodiment of the present invention, may be prepared by a typical method in the art.

For example, cathode active material and anode active material of the present invention are mixed with a binder, a solvent, and a conductive agent and a dispersant if necessary, and stirred to prepare a slurry. Then, a current collector may be coated with the slurry and pressed to prepare an electrode.

Various types of binder polymers, such as a polyvinylidene fluoride-hexafluoropropylene copolymer (PVDF-co-HEP), polyvinylidene fluoride, polyacrylonitrile, and polymethylmethacrylate, may be used as the binder that is used in the present invention.

Lithium-containing transition metal oxide may be used as the cathode active material. For example, any one selected from the group consisting of LiₓCoO(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂ (0. 5<x<1. 3 , 0<y<1), LiₓCo_{1-y}Mn_{y}O₂ (0. 5<x<1. 3 , 0≤y<1), LiₓNi_{1-y}Mn_{y}O₂ (0.5<x<1.3, 0≤y<1), Liₓ(NiₐCo_{b}Mn_{c})O₄ (0.5<x<1.3, 0<a<2, 0<b<2, 0<c<2, a+b+c=2), LiₓMn_{2-z}Ni_{z}O₄ (0.5<x<1.3, 0<z<2), LiₓMn_{2-z}CO_{z}O₄(0.5<x<1.3, 0<z<2), LiₓCoPO₄(0.5<x<1.3), and LiₓFePO₄(0.5<x<1.3), or a mixture of two or more thereof may be used. The lithium-containing transition metal oxide may be coated with a metal, such as aluminum (Al), or a metal oxide. Also, sulfide, selenide, and halide may be used in addition to the lithium-containing transition metal oxide.

When the electrode is prepared, the electrode may be used to prepare a lithium secondary battery including a separator and an electrolyte solution which are typically used in the art and disposed between the cathode and the anode.

In the electrolyte solution used in the present invention, a lithium salt, which may be included as an electrolyte, may be used without limitation so long as it is typically used in an electrolyte solution for a lithium secondary battery. For example, any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

In the electrolyte solution used in the present invention, an organic solvent included in the electrolyte solution may be used without limitation so long as it is typically used in the electrolyte solution for a lithium secondary battery. Typically, any one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, γ-butyrolactone, propylene sulfite, and tetrahydrofuran, or a mixture of two or more thereof may be used. In particular, ethylene carbonate and propylene carbonate, ring-type carbonates among the carbonate-based organic solvents, well dissociate the lithium salt in the electrolyte solution due to high dielectric constants as high-viscosity organic solvents, and thus, the ring-type carbonate may be used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate, for example, may be used.

Selectively, the electrolyte solution stored according to the present invention may further include an additive, such as an overcharge inhibitor, which is included in a typical electrolyte solution.

A typical porous polymer film used as a typical separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used. However, the separator is not limited thereto.

A shape of the lithium secondary battery of the present invention is not particularly limited, and for example, a cylindrical type using a can, a prismatic type, a pouch type, or a coin type may be used.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present inventive concept to those skilled in the art.

### Examples

Hereinafter, the present invention will be described in more detail, according to examples and experimental examples. However, the present invention is not limited thereto.

### < Preparation of Anode active material>

### Example 1

Gold (Au) was disposed on graphite particles having an average particle diameter (D₅₀) of about 20 µm and the graphite particles and Au were put in a batch type reactor. A temperature of the reactor was maintained at about 400°C, and a VLS reaction was then performed while flowing SiH₄ as a reaction gas by using argon (Ar) as a carrier gas. As a result, silicon nanowires having a diameter of 10 nm to 100 nm and a length of 2 µm were grown on the graphite particles. A weight of the silicon nanowires may be controlled according to a reaction time. In the present example, a weight ratio of graphite to silicon nanowires was 92 wt%:8 wt%.

Wet coating was performed by dipping the graphite on which silicon nanowires were grown in ethanol in which coal-derived pitch was diluted (6 wt% pitch-ethanol solution), and a heat treatment was then performed at 400°C in an argon atmosphere to prepare an anode active material including a carbon coating layer on surfaces of graphite on which silicon nanowires were grown and the silicon nanowires.

### Comparative Example 1

An anode active material was prepared in the same manner as in Example 1 except that a carbon coating layer was not formed on graphite particles on which silicon nanowires are grown. A weight ratio of graphite to silicon nanowires was 92 wt%:8 wt%.

### <Preparation of Lithium Secondary Battery>

### Example 2

The anode active material prepared in Example 1, a styrene-butadiene rubber (SBR) as a binder, carboxymethyl cellulose (CMC) as a thickener, and acetylene black as a conductive agent were mixed at a weight ratio of 95:2:2:1 and the mixture thus obtained was mixed with water as a solvent to prepare a uniform anode slurry. One surface of a copper current collector was coated with the prepared anode slurry to a thickness of 65 µm, dried and rolled. Then an anode was prepared by punching into a predetermined size.

Ethylene carbonate (EC) and diethyl carbonate (DEC) were mixed at a volume ratio of 30:70, and LiPF₆ was added to the non-aqueous electrolyte solvent thus prepared to prepare a 1 M LiPF₆ non-aqueous electrolyte solution.

Also, a lithium foil was used as a counter electrode, i.e. a cathode, a polyolefin separator was disposed between both electrodes, and a coin-type lithium secondary battery was then prepared by injecting the electrolyte solution.

### Comparative Example 2

A coin-type lithium secondary battery was prepared in the same manner as in Example 2 except that the anode active material prepared in Comparative Example 1 was used.

### Experimental Example 1

### <Scanning electron microscope (SEM) Images: Identification of Carbon Coating Layer Formation>

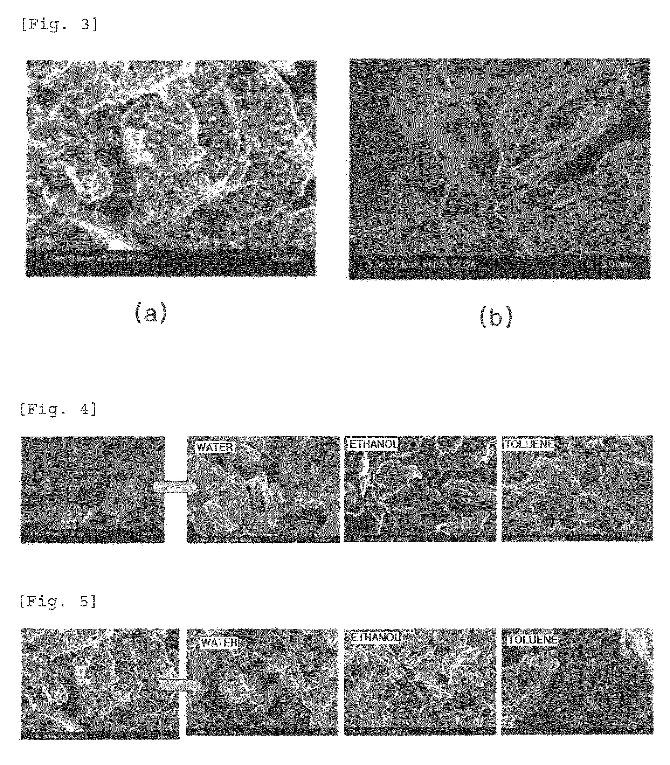

SEM analysis was respectively performed on the anode active materials prepared in Comparative Example 1 and Example 1 to identify the degree of growth of silicon nanowires, and the results thereof are respectively presented in FIGS. 2 and 3.

Specifically, FIGS. 2(a) to 2(c) illustrate SEM images of a surface of the anode active material with no carbon coating layer that is prepared in Comparative Example 1 according to magnification, and FIGS. 3(a) and 3(b) illustrate SEM images of a surface of the anode active material including a carbon coating layer that is prepared in Example 1 according to magnification.

As illustrated in FIGS. 2 and 3, it may be identified that silicon nanowires were grown on graphite particles in both of Example 1 and Comparative Example 1. In particular, as illustrated in FIG. 3, it may be identified that the carbon coating layer was included on all of the graphite particles and silicon nanowires.

In contrast, when a high magnification image of FIG. 2(c) was examined, it may be identified that silicon nanowires were grown on carbon-based particles, but a carbon coating layer was not formed.

### Experimental Example 2

### <SEM Images: Identification of Physical Bonding Force Between Carbon-Based Particles and Silicon Nanowires>

The anode active materials prepared in Comparative Example 1 and Example 1 were respectively diluted at 1 g/mL in water, ethanol, and toluene, and stirred at 60°C for 12 hours. Then, degrees in which silicon nanowires remained in each solvent were identified by SEM images, and the results thereof are presented in FIGS. 4 and 5.

As illustrated in FIG. 4, with respect to Comparative Example 1 with no carbon coating layer, it may be identified that a portion of the silicon nanowires was detached after being diluted in water, and it may be also identified that most of the silicon nanowires were detached from the graphite particles in ethanol and toluene so that the silicon nanowires almost did not remain on the graphite particles.

In contrast, as illustrated in FIG. 5, with respect to the anode active material of Example 1, it may be identified that the silicon nanowires were combined with the graphite particles and remained intact in water, toluene, and ethanol.

Thus, it may be understood that the physical bonding force between the carbon-based particles and the silicon nanowires were strengthened by including the carbon coating layer on the carbon-based particles and the silicon nanowires grown thereon.

### Experimental Example 3

### <Cycle Characteristics>

Charge and discharge characteristics were evaluated for the lithium secondary batteries of Example 2 and Comparative Example 2 by using a charge and discharge machine (WBCS 3000 by WONA TECH).

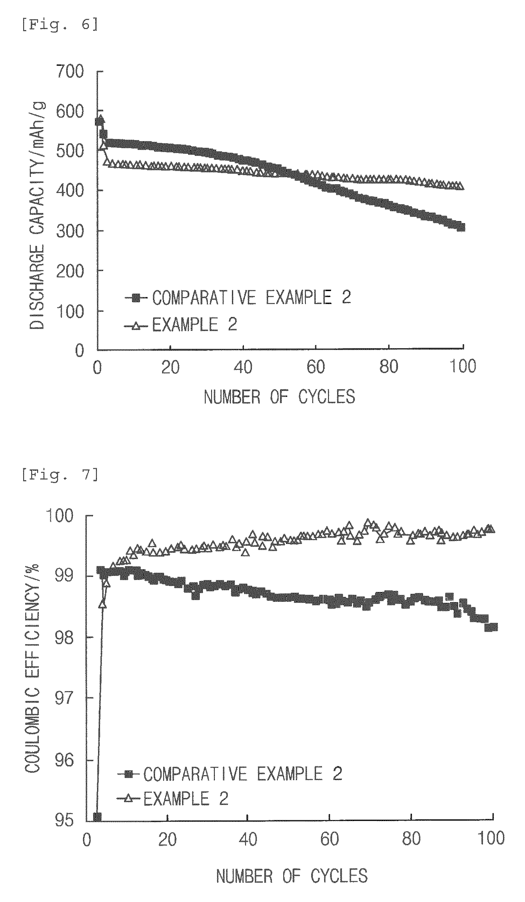

The lithium secondary batteries (battery capacity: 3.4 mAh) prepared in Example 2 and Comparative Example 2 were charged at a constant current (CC) of 0.1 C to a voltage of 10 mV, and thereafter, charge in the first cycle was performed by charging the lithium secondary batteries at a constant voltage (CV) to a current of 0.17 mAh. After the batteries were left standing for 10 minutes, discharge capacities in the first cycle were measured by discharging the batteries at a constant current of 0.1 C to a voltage of 1 V. Subsequently, with respect to each battery of Example 2 and Comparative Example 2, the charge and discharge were repeated 100 cycles to measure discharge capacity for each cycle. The results thereof are presented in FIG. 6.

As illustrated in FIG. 6, with respect to Comparative Example 2, the capacity was decreased from a 50^{th} cycle and was decreased to 50% or more in a 100^{th} cycle. In contrast, with respect to Example 2, it may be understood that the capacity was almost unchanged up to a 60^{th} cycle and remained almost unchanged even up to the 100^{th} cycle.

Also, as illustrated in FIG. 7, with respect to Comparative Example 2, a coulombic efficiency was decreased as the number of cycles increased. In contrast, with respect to Example 2, an initial coulombic efficiency was similar to that of Comparative Example 2. However, the coulombic efficiency was increased as the number of cycles increased, and a coulombic efficiency of up to 99.99% was obtained in the 100^{th} cycle.

This indicated that since the prepared silicon nanowires were not damaged and remained intact on the graphite particles due to the carbon coating layer, the lifetime of the battery may be improved.

### INDUSTRIAL APPLICABILITY

Since an anode active material according to an embodiment of the present invention may not only improve conductivity but may also further increase the physical bonding force between carbon-based particles and silicon nanowires, lifetime characteristics of a secondary battery may be improved. Thus, the anode active material may be suitable for secondary batteries.

## Claims

1. An anode active material comprising:
carbon-based particles;
silicon nanowires grown on the carbon-based particles; and
a carbon coating layer formed on surfaces of the carbon-based particles and the silicon nanowires
wherein an average particle diameter, D₅₀, of the carbon-based particles is in a range of 10 µm to 30 µm,
the silicon nanowire has a diameter ranging from 10 nm to 100 nm and a length ranging from 100 nm to 5 µm,
a thickness of the carbon coating layer is in a range of 5 nm to 50 nm, and
the carbon coating layer covers the entire surfaces of the carbon-based particles and the silicon nanowires, **characterized in that** an amount of silicon is in a range of 5 wt% to 30 wt% based on a total weight of the carbon-based particles on which the silicon nanowires are grown.

2. The anode active material of claim 1, wherein the carbon-based particles comprises any one selected from the group consisting of carbon-based powder, carbon black, natural graphite, and artificial graphite, or a mixture of two or more thereof.

3. The anode active material of claim 1, wherein a specific surface area, Brunauer-Emmett-Teller BET, of the carbon-based particles is in a range of 2.0 m²/g to 5.0 m²/g, and a compressed density of the carbon-based particles is in a range of 1.5 g/cc to 1.85 g/cc under a pressure of 12 MPa to 16 MPa.

4. A method of preparing an anode active material, the method comprising:
growing silicon nanowires on carbon-based particles by using a silicon raw material and a catalytic metal; and
forming a carbon coating layer on surfaces of the silicon nanowires and the carbon-based particles on which the silicon nanowires are grown to cover the entire surfaces of the carbon-based particles and the silicon nanowires,
wherein the carbon coating layer is formed by coating the carbon-based particles on which the silicon nanowires are grown with a carbon precursor and performing a heat treatment, **characterized in that**
the coating is performed by a wet coating method using a diluted amorphous carbon precursor in an organic solvent,
the amorphous carbon is a coal-derived pitch or a petroleum-derived pitch having a weight-average molecular weight ranging from 400 to 1,500,
the organic solvent comprises any one selected from the group consisting of ethanol, toluene, methanol, hexane, acetone, tetrahydrofuran, pyridine, quinoline, and benzoquinone, or a mixture of two or more thereof,
the heat treatment is performed in an inert atmosphere, and
an amount of silicon is in a range of 5 wt% to 30 wt% based on a total weight of the carbon-based particles on which the silicon nanowires are grown.

5. The method of claim 4, wherein the growing of the silicon nanowires is performed by a method selected from the group consisting of a vapor-liquid-solid (VLS) method, a solid-liquid-solid (SLS) method, a metal organic chemical vapor deposition (MOCVD) method, and a molecular beam epitaxy (MBE) method.

6. The method of claim 4, wherein the silicon raw material comprises SiCl₄, SiH₄, or a mixture thereof.

7. The method of claim 4, wherein the catalytic metal comprises any one selected from the group consisting of gold (Au), iron (Fe), silver (Ag), and nickel (Ni), or a mixed metal of two or more thereof.

8. The method of claim 4, wherein the wet coating method is performed by dipping the carbon-based particles on which the silicon nanowires are grown in the organic solvent in which amorphous carbon is diluted.

9. The method of claim 4, wherein a mixing ratio of the carbon-based particles on which the silicon nanowires are grown to the carbon precursor is in a range of 90 parts by weight: 10 parts by weight to 99 parts by weight:1 part by weight.

10. The method of claim 4, wherein the heat treatment is performed at a temperature ranging from 300°C to 1,500°C.

11. An anode comprising a current collector, and the anode active material of claim 1 formed at least one surface of the current collector.

12. A lithium secondary battery comprising a cathode, the anode of claim 11, and a separator disposed between the cathode and the anode.

## Patentansprüche

1. Anoden-Aktivmaterial, umfassend:
Teilchen auf Kohlenstoffbasis;
Siliziumnanodrähte, die auf den Teilchen auf Kohlenstoffbasis gewachsen sind; und
eine Kohlenstoffbeschichtungsschicht, gebildet auf Oberflächen der Teilchen auf Kohlenstoffbasis und der Siliziumnanodrähte,
wobei ein durchschnittlicher Teilchendurchmesser, D₅₀, der Teilchen auf Kohlenstoffbasis in einem Bereich von 10 µm bis 30 µm ist,
der Siliziumnanodraht einen Durchmesser im Bereich von 10 nm bis 100 nm und eine Länge im Bereich von 100 nm bis 5 µm aufweist,
eine Dicke der Kohlenstoffbeschichtungsschicht in einem Bereich von 5 nm bis 50 nm ist, und
die Kohlenstoffbeschichtungsschicht die gesamten Oberflächen der Teilchen auf Kohlenstoffbasis und der Siliziumnanodrähte abdeckt, **dadurch gekennzeichnet, dass**
eine Menge an Silizium in einem Bereich von 5 Gew.-% bis 30 Gew.-%, basierend auf einem Gesamtgewicht der Teilchen auf Kohlenstoffbasis, auf denen die Siliziumnanodrähte gewachsen sind, ist.

2. Anoden-Aktivmaterial nach Anspruch 1, wobei die Teilchen auf Kohlenstoffbasis irgendwelche umfassen, die ausgewählt sind aus der Gruppe bestehend aus Pulver auf Kohlenstoffbasis, Ruß, natürlichem Graphit und künstlichem Graphit oder einer Mischung aus zwei oder mehreren derselben.

3. Anoden-Aktivmaterial nach Anspruch 1, wobei eine spezifische Oberfläche, Brunauer-Emmett-Teller BET, der Teilchen auf Kohlenstoffbasis in einem Bereich von 2,0 m²/g bis 5,0 m²/g ist, und eine Pressdichte der Teilchen auf Kohlenstoffbasis in einem Bereich von 1,5 g/cc bis 1,85 g/cc unter einem Druck von 12 MPa bis 16 MPa ist.

4. Verfahren zum Herstellen eines Anoden-Aktivmaterials, wobei das Verfahren umfasst:
Wachsen von Siliziumnanodrähten auf Teilchen auf Kohlenstoffbasis durch Verwendung eines Siliziumrohmaterials und eines katalytischen Metalls; und
Bilden einer Kohlenstoffbeschichtungsschicht auf Oberflächen der Siliziumnanodrähte und der Teilchen auf Kohlenstoffbasis, auf denen die Siliziumnanodrähte gewachsen sind, um die gesamten Oberflächen der Teilchen auf Kohlenstoffbasis und der Siliziumnanodrähte abzudecken,
wobei die Kohlenstoffbeschichtungsschicht gebildet wird durch Beschichten der Teilchen auf Kohlenstoffbasis, auf denen die Siliziumnanodrähte gewachsen sind, mit
einer Kohlenstoffvorstufe und Durchführen einer Wärmebehandlung, **dadurch gekennzeichnet, dass**
die Beschichtung durchgeführt wird durch ein Nassbeschichtungsverfahren unter Verwendung einer verdünnten amorphen Kohlenstoffvorstufe in einem organischen Lösungsmittel,
wobei der amorphe Kohlenstoff ein von Kohle abgeleitetes Pech oder ein von Erdöl abgeleitetes Pech mit einem Gewichtsmittelmolekulargewicht im Bereich von 400 bis 1.500 ist,
das organische Lösungsmittel irgendeines umfasst, das ausgewählt ist aus der Gruppe bestehend aus Ethanol, Toluol, Methanol, Hexan, Aceton, Tetrahydrofuran, Pyridin, Chinolin und Benzochinon oder einer Mischung aus zwei oder mehreren derselben,
die Wärmebehandlung in einer inerten Atmosphäre durchgeführt wird, und
eine Menge an Silizium in einem Bereich von 5 Gew.-% bis 30 Gew.-% liegt, basierend auf einem Gesamtgewicht der Teilchen auf Kohlenstoffbasis, auf denen die Siliziumnanodrähte gewachsen sind.

5. Verfahren nach Anspruch 4, wobei das Wachsen der Siliziumnanodrähte durchgeführt wird durch ein Verfahren ausgewählt aus der Gruppe bestehend aus einem Dampf-Flüssigkeit-Feststoff-Verfahren (VLS), einem Fest-Flüssig-Fest-Verfahren (SLS), einem metallorganischen chemischen Dampfabscheidungsverfahren (MOCVD) und einem Molekularstrahlepitaxieverfahren (MBE).

6. Verfahren nach Anspruch 4, wobei das Siliziumrohmaterial SiCl₄, SiH₄ oder eine Mischung derselben umfasst.

7. Verfahren nach Anspruch 4, wobei das katalytische Metall irgendeines umfasst, das ausgewählt ist aus der Gruppe bestehend aus Gold (Au), Eisen (Fe), Silber (Ag) und Nickel (Ni) oder einem gemischten Metall aus zwei oder mehreren derselben.

8. Verfahren nach Anspruch 4, wobei das Nassbeschichtungsverfahren durchgeführt wird durch Eintauchen der Teilchen auf Kohlenstoffbasis, auf denen die Siliziumnanodrähte gewachsen sind, in dem organischen Lösungsmittel, in dem amorpher Kohlenstoff verdünnt ist.

9. Verfahren nach Anspruch 4, wobei ein Mischverhältnis der Teilchen auf Kohlenstoffbasis, auf denen die Siliziumnanodrähte gewachsen sind, zu der Kohlenstoffvorstufe in einem Bereich von 90 Gewichtsteile : 10 Gewichtsteile bis 99 Gewichtsteile : 1 Gewichtsteil liegt.

10. Verfahren nach Anspruch 4, wobei die Wärmebehandlung durchgeführt wird bei einer Temperatur im Bereich von 300°C bis 1500°C.

11. Anode umfassend einen Stromsammler und das Anoden-Aktivmaterial nach Anspruch 1, gebildet auf wenigstens einer Oberfläche des Stromsammlers.

12. Lithiumsekundärbatterie umfassend eine Kathode, die Anode nach Anspruch 11 und einen Separator, der zwischen der Kathode und der Anode angeordnet ist.

## Revendications

1. Matériau anodique actif comprenant :
des particules à base de carbone ;
des nanofils de silicium obtenus par croissance sur les particules à base de carbone ; et
une couche de dépôt de carbone formée sur les surfaces des particules à base de carbone et des nanofils de silicium,
où un diamètre moyen, D50, des particules à base de carbone est dans une plage de 10 µm à 30 µm,
le nanofil de silicium a un diamètre allant de 10 nm à 100 nm et une longueur allant de 100 nm à 5 µm,
une épaisseur de la couche de dépôt de carbone est dans une plage de 5 nm à 50 nm et
la couche de dépôt de carbone couvre les entières surfaces des particules à base de carbone et des nanofils de silicium, **caractérisé en ce qu'**une quantité de silicium est dans une plage de 5 % en poids à 30 % en poids du poids total des particules à base de carbone sur lesquelles la croissance des nanofils de silicium est effectuée.

2. Matériau anodique actif de la revendication 1, où les particules à base de carbone comprennent l'un quelconque de ceux du groupe consistant en les suivants : poudre à base de carbone, noir de carbone, graphite naturel, graphite artificiel ou mélange de deux ou plus de ceux-ci.

3. Matériau anodique actif de la revendication 1, où une surface spécifique, déterminée par l'équation de Brunauer-Emmett-Teller (surface BET), des particules à base de carbone est dans une plage de 2,0 m²/g à 5,0 m²/g et où une masse volumique après tassement est dans une plage de 1,5 g/cc à 1,85 g/cc à une pression allant de 12 MPa à 16 MPa.

4. Procédé de préparation d'un matériau anodique actif, le procédé comprenant :
la croissance de nanofils de silicium sur des particules à base carbone en utilisant un silicium servant de matière première et un métal catalytique ; et
la formation d'une couche de dépôt de carbone sur les surfaces des nanofils de silicium et des particules à base de carbone sur lesquelles la croissance des nanofils de silicium est effectuée de manière à couvrir les entières surfaces des particules à base de carbone et des nanofils de silicium,
où la couche de dépôt de carbone est formée en revêtant les particules à base de carbone sur lesquelles la croissance des nanofils de silicium est effectuée d'un précurseur de carbone et en réalisant un traitement thermique, **caractérisé en ce que**
le dépôt est réalisé par une méthode de revêtement par voie humide en utilisant un précurseur de carbone amorphe dilué dans un solvant organique,
le carbone amorphe est un brai dérivé du charbon ou un brai dérivé du pétrole dont la masse moléculaire moyenne en poids est dans la plage de 400 à 1 500,
le solvant organique comprend l'un quelconque de ceux du groupe consistant en les suivants : éthanol, toluène, méthanol, hexane, acétone, tétrahydrofurane, pyridine, quinoléine, benzoquinone ou mélange de deux ou plus de ceux-ci,
le traitement thermique est réalisé sous atmosphère inerte et
une quantité de silicium est dans une plage de 5 % en poids à 30 % en poids du poids total des particules à base de carbone sur lesquelles la croissance des nanofils de silicium est effectuée.

5. Procédé de la revendication 4, où la croissance des nanofils de silicium est effectuée par une méthode sélectionnée dans le groupe consistant en une méthode vapeur-liquide-solide (VLS), une méthode solide-liquide-solide (SLS), une méthode de dépôt chimique en phase vapeur à partir de précurseurs métallorganiques (MOCVD) et une méthode d'épitaxie par jets moléculaires (MBE).

6. Procédé de la revendication 4, où le silicium servant de matière première comprend le SiCl₄, le SiH₄ ou un mélange de ceux-ci.

7. Procédé de la revendication 4, où le métal catalytique comprend l'un quelconque de ceux du groupe consistant en l'or (Au), le fer (Fe), l'argent (Ag), le nickel (Ni) ou un métal mixte constitué d'un mélange de deux ou plus de ceux-ci.

8. Procédé de la revendication 4, où la méthode de revêtement par voie humide est réalisée en immergeant les particules à base de carbone sur lesquelles la croissance des nanofils de silicium est effectuée dans le solvant organique dans lequel le carbone amorphe est dilué.

9. Procédé de la revendication 4, où les proportions du mélange de particules à base de carbone sur lesquelles la croissance des nanofils de silicium est effectuée et du précurseur de carbone sont dans une plage qui va de 90 parties en poids:10 parties en poids à 99 parties en poids:1 partie en poids.

10. Procédé de la revendication 4, où le traitement thermique est réalisé à une température qui va de 300°C à 1 500 °C.

11. Anode comprenant un collecteur de courant, le matériau anodique actif de la revendication 1 formant au moins une surface du collecteur de courant.

12. Accumulateur au lithium comprenant une cathode, l'anode de la revendication 11 et un séparateur positionné entre la cathode et l'anode.
